# EUROPÄISCHE PATENTSCHRIFT

(11) **EP 3 747 183 B1**
(45) Veröffentlichungstag und Bekanntmachung des Hinweises auf die Patenterteilung: **15.03.2023**
(21) Anmeldenummer: 19702847.5
(22) Anmeldetag: 29.01.2019
(51) Int. Cl.: H04M 1/04, B60R 11/02, F16M 11/04

(54) **UNIVERSIELLE HALTERUNG FÜR EIN TELEKOMMUNIKATIONS-ENDGERÄT**
UNIVERSAL SUPPORT FOR A TELECOMMUNICATION DEVICE
SUPPORT UNIVERSEL POUR UN TERMINAL DE TÉLÉCOMMUNICATION

(30) Priorität: 29.01.2018 DE 102018000658
(43) Veröffentlichungstag der Anmeldung: 09.12.2020
(73) Patentinhaber: Wieth, Franz, 82178 Puchheim (DE); Filosi, Andreas, 82178 Puchheim (DE)
(72) Erfinder: Wieth, Franz, 82178 Puchheim (DE); Filosi, Andreas, 82178 Puchheim (DE)
(74) Vertreter: Braun-Dullaeus Pannen Emmerling Patent- & Rechtsanwaltspartnerschaft mbB
(86) Internationale Anmeldenummer: PCT/EP2019/052119
(87) Internationale Veröffentlichungsnummer: WO 2019/145564

(56) Entgegenhaltungen:
- WO-A1-2017/184517
- DE-U1-202004 006 834
- NO-A1- 20 093 230
- US-A1- 2012 161 406
- US-A1- 2014 265 185

## Beschreibung

Die Erfindung betrifft eine Halterung für ein Telekommunikations-Endgerät, wobei die Halterung zwei Backen aufweist, wobei die erste Backe eine erste Aufnahme für eine erste Randseite des Telekommunikations-Endgeräts und eine zweite Backe eine zweite Aufnahme für eine der ersten Randseite gegenüberliegende zweite Randseite des Telekommunikations-Endgeräts umfasst. Des Weiteren betrifft die Erfindung ein Verfahren zum Einführen eines Telekommunikations-Endgeräts in eine erfindungsgemäße Halterung.

Halterungen für Telekommunikations-Endgeräte, wie beispielsweise Smartphones, werden in vielen Ausführungsformen angeboten. Sie werden im allgemeinen dafür eingesetzt, das in ihnen gehaltene Smartphone an einem gewünschten Ort zu befestigen und bedienen zu können, ohne es dabei in der Hand halten zu müssen. So zeigt beispielsweise das DE 20 2011 051 891 U1 eine Haltevorrichtung für ein Mobiltelefon mit zwei an einer Führungsschiene befestigten Halteklauen, welche das zwischen ihnen angeordnete Mobiltelefon kraftschlüssig halten, indem sie von zwei Seiten gegen die Seitenränder des Mobiltelefons geführt und in dieser Position verrastet werden.

Aus der WO 2015/055851 ist eine Smartphone-Halterung bekannt, deren Aufnahmeraum das Smartphone entlang dessen Randseiten vollständig umschließt. Der Aufnahmeraum wird durch Einschieben eines U-förmigen Bügels in den Grundkörper der Halterung verkürzt, wodurch das darin liegende Smartphone eingespannt wird.

Nachteilig an diesen Lösungen ist, dass zum sicheren Halten des Smartphones in der Halterung immer zumindest zwei Schritte erforderlich sind. Als erstes ist das Smartphone in die Halterung einzusetzen, danach wird diese geschlossen.

Aus dem DE 20 2004 006 834 U1 ist eine Halterung für ein Telekommunikationsendgerät bekannt, welche zwei Backen aufweist, wobei die erste Backe eine erste Aufnahme eine erste Randseite des Telekommunikations-Endgeräts und eine zweite Backe eine zweite Aufnahme für eine der ersten Randseite gegenüberliegende zweite Randseite des Telekommunikations-Endgeräts umfasst.

Die US 2012/0161406 A1 zeigt einen Halter für ein mobiles Telekommunikationsendgerät, welcher eine Aufnahme mit V-förmigen Führungsschienen aufweist.

Die Erfindung stellt sich die Aufgabe, eine Halterung für ein Telekommunikationsendgeräte vorzuschlagen, welche einfacher zu bedienen ist.

Diese Aufgabe wird von der Halterung für ein Telekommunikations-Endgerät mit den Merkmalen des Anspruchs 1 und von dem Verfahren zum Einführen eines Telekommunikations-Endgeräts in eine Halterung mit den Merkmalen des Anspruchs 11 gelöst.

Ein wesentlicher Grundgedanke der Erfindung ist es, dass die erste und die zweite Aufnahme in einer Ausgangsposition der Halterung jeweils eine Seite einer zumindest im wesentlichen V-förmige Einschuböffnung für das Telekommunikations-Endgerät ausbilden, dass wenigstens eine der Backen drehbar an einem Gehäuse der Halterung befestigt ist, dass die Aufnahme der drehbar befestigten Backe zwei Abschnitte aufweist, wobei der erste Abschnitt in Einschubrichtung des Telekommunikations-Endgeräts vor der Rotationsachse der Backe angeordnet ist und der zweite Abschnitt in Einschubrichtung des Telekommunikations-Endgeräts hinter der Rotationsachse der Backe angeordnet ist, wobei die drehbar befestigte Backe gegen die Rückstellkraft eines ersten Federelements drehbar ist.

Das erfindungsgemäße Verfahren zum Einführen des Telekommunikations-Endgeräts in eine Halterung ist dadurch gekennzeichnet, dass die Halterung zwei Backen umfasst, wobei jede Backe eine Aufnahme für eine Randseite des Telekommunikations-Endgeräts aufweist, wobei jede Aufnahme in einer Ausgangsposition der Halterung eine Seite einer zumindest im wesentlichen V-förmigen Einschuböffnung ausbildet, wobei in einem ersten Schritt das Telekommunikations-Endgerät in die Einschuböffnung eingeführt wird, so dass gegenüberliegende Randseiten des Telekommunikations-Endgeräts an jeweils einer der Aufnahmen zur Anlage kommen, wobei ein weiteres Einschieben des Telekommunikations-Endgeräts entlang eines ersten Abschnitts der beiden Aufnahmen zumindest eine der Backen transversal zur Einschubrichtung verschiebt, und dass die gegenüberliegenden Randseiten in einem zweiten Schritt in einen zweiten Abschnitt der beiden Aufnahmen eingeschoben werden, wobei beim Erreichen der zweiten Abschnitte diese parallel zu einander angeordnet werden.

Eine derartige Halterung bzw. ein derartiges Verfahren ermöglichen, dass mit dem Einführen des Telekommunikations-Endgeräts in die Einschuböffnung bereits ein kraftschlüssiges Festhalten des Telekommunikations-Endgeräts in der Halterung bewirkt wird. Ein separater Schritt zur Befestigung des Telekommunikations-Endgeräts in der Halterung ist nicht länger erforderlich.

In einer bevorzugten Ausführungsform sind beide Backen drehbar an dem Gehäuse der Halterung befestigt. Hierdurch werden sie in die Lage versetzt, durch zueinander gegenläufige Bewegungen das Einsetzen des Telekommunikations-Endgeräts zu erleichtern. In einer Grundform der Erfindung reicht es aber vollkommen aus, nur eine der Backen drehbar an dem Gehäuse der Halterung zu befestigen, während die andere Backe fest mit dem Gehäuse verbunden ist. In dieser Grundform führt nur die drehbare Backe die Bewegung aus, welche erforderlich ist, um ein Einsetzen des Telekommunikation-Endgeräts zu ermöglichen. Im Weiteren wird die Erfindung anhand der bevorzugten Ausführungsform beschrieben, in der beide Backen drehbar sind. Dies schließt aber immer die Ausführungsform mit nur einer beweglichen Backe ein.

Die Funktion der erfindungsgemäßen Halterung wird im Folgenden ausgehend von der Ausgangsposition der Halterung beschrieben. Die Ausgangsposition ist die Position, in welcher die Aufnahmen der Backen leer sind, also nicht durch ein Einsetzen des Endgeräts beaufschlagt werden. In dieser Position werden die Backen durch die Rückstellkraft des ersten Federelements zusammen gehalten. Ein weiteres Zusammendrücken der Backen über die Ausgangsposition hinaus wird dabei durch einen am Gehäuse ausgebildeten Anschlag für die Backen begrenzt oder indem die beiden Backen in der Ausgangsposition aneinander anstoßen. Das Einsetzen eines Telekommunikations-Endgeräts in die zumindest im wesentlichen V-förmigen Einschuböffnung führt zu einer Positionsänderung der drehbar befestigten Backe hin zu einer Aufnahmeposition. Dies ist die Position, in welcher das Telekommunikations-Endgerät zwischen den zweiten Abschnitten der Aufnahmen der beiden Backen kraftschlüssig gehalten wird.

Beim Einsetzen des Telekommunikations-Endgeräts in die zumindest im wesentlichen V-förmige Einschuböffnung wird die Position des Endgeräts entlang des Verlaufs der ersten Abschnitte der ersten und zweiten Aufnahmen mittig in die Einschuböffnung geführt, dort quasi zentriert. Sobald das Endgerät soweit eingeschoben ist, dass sein in der Aufnahme geführter Seitenrand eine Position erreicht hat, in der er zwischen den Rotationsachsen der Backen angeordnet ist, führt ein weiteres Einschieben des Endgeräts zu einem Druck des Seitenrands auf den zweiten Abschnitt der Aufnahme. Dies führt zu einer Rotation der Backen gegen die Rückstellkraft des ersten Federelements. Aufgrund der Rotation werden die zweiten Abschnitte der Aufnahmen auseinander geführt, sozusagen aufgespreizt. Die Rotation endet in einer Position, in der die beiden zweiten Abschnitte nicht mehr V-förmig, sondern parallel zu einander ausgerichtet sind. In den sich durch das Auseinanderspreizen der zweiten Abschnitten geöffneten Raum kann das Telekommunikations-Endgerät nun eingeführt werden. Dort wird es aufgrund der Rückstellkraft des ersten Federelements kraftschlüssig gehalten.

Von besonderem Vorteil ist es dabei, wenn das der Einschuböffnung entgegengesetzte Ende der Aufnahme eine insbesondere transversal zur Einschuböffnung ausgebildetes Blockadeelement aufweist, welches die Aufnahme begrenzt und ein Weiterschieben der Seitenränder des Telekommunikations-Endgeräts verhindert. Ohne das Blockadeelement wäre es möglich, die Seitenkanten des Telekommunikations-Endgeräts am Ende der Aufnahme aus dieser wieder hinaus zu schieben.

Für die Entnahme des Telekommunikation-Endgeräts aus der Halterung werden die zuvor beschriebenen Schritte in entgegengesetzter Reihenfolge durchgeführt. Das kraftschlüssig zwischen den beiden zweiten Abschnitten gehaltene Telekommunikations-Endgerät wird in Richtung der beiden ersten Abschnitte der Aufnahmen verschoben. Sobald die Seitenränder des Telekommunikation-Endgeräts aus den zweiten Abschnitten wieder herausgeschoben sind, drehen die Backen aufgrund der auf sie wirkenden Rückstellkraft des Federelements zurück in die Ausgangsposition. Das Telekommunikation-Endgerät kann dann leicht aus der Einschuböffnung herausgenommen werden.

Von Vorteil ist es dabei, wenn die Rotationsachse der drehbar befestigten Backe zumindest annähernd transversal zur Einschubrichtung des Telekommunikations-Endgeräts und gegen die Rückstellkraft eines zweiten Federelements verschieblich ist. Diese besonders bevorzugte Ausführungsform der erfindungsgemäßen Halterung versetzt sie in die Lage, sich unterschiedlich breiten Telekommunikations-Endgeräte anpassen zu können und sie unabhängig ihrer Breite aufzunehmen und sicher halten zu können.

Wenn das Telekommunikations-Endgeräte so weit in die Einschuböffnung eingesetzt ist, dass die unteren Ecken seine Randseiten in Kontakt mit den ersten Abschnitten der beidseitigen Aufnahmen treten, kann die Backe bei einem weiteren Einschieben des Endgeräts nun quer zur Einschubrichtung hin ausweichen. An welcher Stelle des ersten Abschnitts dieser Punkt erreicht wird, hängt von der jeweiligen Breite des eingesetzten Telekommunikation-Endgeräts ab. Bei einem weiteren Einschieben entlang des ersten Abschnitts wird die V-Form der Einschuböffnung entsprechend geöffnet. Das Einschieben erfolgt gegen die Rückstellkraft des zweiten Federelements, so dass die Aufnahme dabei an der Ecke der Randseite des Endgeräts anliegt.

Ist das Telekommunikations-Endgerät soweit in die Einschuböffnung eingeschoben, dass die beidseitig in den Aufnahmen anliegenden Ecken der Randseite des Endgeräts die Position zwischen den Rotationsachsen der Backen erreicht hat, bewirkt ein weiteres Einschieben die oben bereits beschriebene Rotation der Backen. Das Telekommunikation-Endgerät kann nach der Rotation in die nun zu einander parallel verlaufenden zweiten Abschnitte der Aufnahmen der jeweiligen Backe eingeschoben werden.

In einer vorteilhaften Ausführungsform sind das erste und das zweite Federelement als ein gemeinsames Federelement ausgebildet. Dies vereinfacht die Konstruktion. Von besonderem Vorteil ist es dabei, wenn das gemeinsame Federelement zwischen der ersten und zweiten Backe gespannt ist. Bei einem derart angeordneten Federelement ist es nicht mehr erforderlich, jede Backe mit einem eigenen Federelement zu beaufschlagen. Als besonders geeignete Lösung für ein entsprechendes Federelement hat sich ein einfaches Gummiband, vorzugsweise in Form einer Silikonkordel, herausgestellt. Diese Silikonkordel ist zum Schutz vor Verschleiß vorzugsweise mit einem Stoffgewebe ummantelt. Ist das Federelement an beiden Backen befestigt, so dass das Drehen einer oder beider der Backen zu einer Streckung des Federelements führt, erfolgt durch das Auseinanderdrücken der beiden Rotationsachsen ebenfalls eine Streckung des Federelements. Wenn die Backen mit ihrer Rotationsachse in das Gehäuse der Halterung eingreifen, kann das Federelement innerhalb des Gehäuses der Halterung verlaufen. Hierzu ist es an den im Gehäuse liegenden Bereich der Rotationsachsen beider Backen zu befestigen. Auf diese Weise ist das Federelement gut gegen äußere Einflüsse geschützt.

In einer besonders bevorzugten Ausführungsform bilden die Backen jeweils einen insbesondere zylinderförmigen Bolzen aus, welcher entlang der Rotationsachse der jeweiligen Backe verläuft. Der Bolzen eignet sich insbesondere dazu, die Bewegung der Backe kontrolliert zu führen. Greift der Bolzen in eine in dem Gehäuse vorgesehene Führung, beispielsweise in Form eines Langlochs, ein, ermöglicht dies sowohl die translatorische Bewegung der Backe wie auch ihre Rotation relativ zum Gehäuse. Zusätzlich kann an dem Bolzen das gemeinsame Federelement befestigt werden. Dabei wird es vorzugsweise in einer den Umfang des Bolzens umlaufenden Nut geführt und daran befestigt.

Vorzugsweise ist in der Grundposition der Halterung der erste Abschnitt der Aufnahme der drehbar befestigten Backe in einen stumpferen Winkel zum ersten Abschnitt der Aufnahme der gegenüberliegenden Backe angeordnet als der zweite Abschnitt der drehbar an dem Gehäuse der Halterung befestigten Backe zum zweiten Abschnitt der Aufnahme der gegenüberliegenden Backe. Die Aufnahmen der im wesentlichen V-förmige Einschuböffnung laufen somit in der Grundposition im Verlauf der ersten Abschnitte stärker auseinander auf als im Verlauf der zweiten Abschnitte der Aufnahmen.

Durch diese bevorzugte Ausgestaltung wird erreicht, dass in der Aufnahmeposition, wenn die beiden zweiten Abschnitte zumindest annähernd parallel zueinander ausgerichtet sind, die ersten Abschnitte zueinander immer noch eine Spreizung aufweisen. Ein in der Aufnahmeposition gehaltenes Telekommunikation-Endgerät wird dann zwischen den zweiten Abschnitten der Aufnahme kraftschlüssig gehalten, während sich zwischen den Randseiten des Telekommunikations-Endgeräts und den Ihnen gegenüberliegenden ersten Abschnitten ein zum oberen Ende des Endgeräts hin zunehmend größerer Spalt öffnet. Hierdurch wird vermieden, dass die randseitig im oberen Bereich eines Telekommunikation-Endgeräts angeordneten Bedienelemente, wie beispielsweise Druckknöpfe oder Wippen, einen Kontakt zu den ersten Abschnitten der Aufnahmen haben. Ein Auslösen von Funktionen am Telekommunikation-Endgerät durch ungewolltes Betätigen dieser Bedienelemente wird so sicher verhindert. Würden die ersten Abschnitte ebenfalls an der Randseite anliegen, könnte von der Halterung übertragene Stöße oder ganz einfach die Rückstellkraft des Federelements dazu führen, dass der Kontakt zu den ersten Abschnitten der Aufnahme eine Betätigung dieser Bedienelemente bewirkt.

Vorzugsweise verläuft zumindest die zweiten Abschnitte der Aufnahmen der beiden Backen gerade und die Rotationsachse der drehbar befestigten Backe ist in der Grundposition der Halterung im Übergang des ersten zum zweiten Abschnitt der Aufnahme angeordnet. Der gerade Verlauf der zweiten Abschnitte führt dazu, dass eine ebenfalls gerade Randseite eines in der Aufnahmeposition gehaltenes Telekommunikations-Endgeräts über den gesamten Verlauf des zweiten Abschnittes gehalten werden kann. Dies gewährleistet einen sicheren Halt. Ein gerader Verlauf der ersten Abschnitte erleichtert darüber hinaus das Einschieben des Telekommunikations-Endgerät in diesem Bereich der Einschuböffnung. Die bevorzugte Anordnung der Rotationsachse führt dazu, dass bei Drehung der Backe keine Anpassung der transversalen Position der Backe erfolgen muss.

In einer weiteren bevorzugten Ausführungsform weist die drehbar befestigten Backe eine Haltevorrichtung auf, die ein weiteres Drehen der Backe und/oder ein Auseinanderschieben der beiden Backen blockiert, sobald die Backe in eine Position gedreht wurde, in welcher ihr zweiter Abschnitt zumindest im Wesentlichen parallel zum zweiten Abschnitt der gegenüberliegenden Backe verläuft. Die Blockade der in der Aufnahmeposition der Halterung angeordneten Backe schützt die Halterung gegen ein ungewolltes Öffnen und den damit möglichen Kontaktverlust zum Telekommunikation-Endgerät, beispielsweise durch Stöße oder Erschütterungen. In einer besonders einfach zur verwirklichenden Ausführungsform ist die Haltevorrichtung an dem Bolzen befestigt, welcher entlang der Rotationsachse der jeweiligen Backe verläuft.

Vorzugsweise ist die Haltevorrichtung ein Stift, der in eine fest mit dem Gehäuse verbundene, transversal zur Einschubrichtung verlaufende Zahnreihe eingreift. Die Zahnreihe ermöglicht es, dass die Backe in einer beliebigen transversalen Position blockiert werden kann. Der Stift wird hierfür so angeordnet, dass er durch die Rotation der Backe gegen die Zahnreihe geführt wird und in sie eingreift. Der Stift stützt sich dann gegen den nächstliegenden Zahn der Zahnreihe ab. Rotiert die Backe bei Entnahme des Telekommunikations-Endgeräts zurück, entfernt sich der Stift aus der Zahnreihe und löst die Blockade.

In einer bevorzugten Ausführungsform weist die drehbar befestigte Backe eine Auflagefläche auf, die in Einschubrichtung vor der Rotationsachse angeordnet ist, wobei die Auflagefläche an einem Bereich einer in Einschubrichtung vor der Rotationsachse angeordneten Oberkante des Gehäuses aufliegt, wobei der Bereich zumindest im Wesentlichen transversal zur Einschubrichtung und parallel zu Rotationsachse verläuft. Hierdurch wird eine Drehung der Backe weg vom Telekommunikations-Endgerät verhindert, welche durch das Drehmoment bewirkt wird, das beim Einsetzen des Telekommunikations-Endgeräts in die Einschuböffnung durch dessen Kontakt mit den ersten Abschnitten wirkt.

Von Vorteil ist es auch, wenn die erste und zweite Aufnahme an ihrem Boden zumindest im wesentlichen U-förmig ausgebildet ist, so dass die in sie eingesetzten Randseiten des Telekommunikations-Endgeräts beidseitig hinterschnitten werden, wobei der Abstand der beiden Schenkel sich zum Boden des U hin insbesondere verringert. Die U-förmige Ausbildung der Aufnahmen verhindert durch den Formschluss mit der Vorder- bzw. Rückseite des Endgeräts oder dessen Hülle, dass ein in sie eingesetztes Endgerät nach vorne bzw. hinten aus der Aufnahme herausfallen kann.

Der schmaler werdende Abstand zwischen den Schenkeln des Ruß ermöglicht es der Aufnahme, auch unterschiedlich dicke Telekommunikations-Endgeräte bzw. solche mit unterschiedlich dicken Schutzhüllen sicher zu halten. Das Einsetzen des Telekommunikations-Endgeräts oder dessen die Randseite bedeckenden Hülle in die Aufnahme führt zu einem Kontakt zwischen der Aufnahme und dem unteren Eckbereich der Randseite des Telekommunikations-Endgeräts. Die Dicke des Endgeräts bestimmt die mögliche Eindringtiefe in die Aufnahme. Wenn das Endgerät in eine Schutzhülle oder einen Rahmen eingesetzt ist, welche die Randseite des Endgeräts und deren Kanten zumindest in diesem Eckbereich schützt, wird die Hülle bzw. der Rahmen nach dem gleichen Prinzip gefasst. Auf diese Weise kann das Endgerät bzw. dessen Hülle soweit in die Aufnahme eingesetzt werden, bis es bis es beidseitig an den Schenkeln des U anliegt, also ohne Spiel gehalten wird.

Vorteilhaft ist es auch, wenn der näher am Gehäuse der Halterung liegende Schenkel der Aufnahme eine Lasche aufweist, die in der Aufnahme vorsteht und beim Einsetzen des Telekommunikations-Endgeräts in die Aufnahme in Richtung des Gehäuses der Halterung gedrückt wird. Diese Lasche ist so angeordnet, dass sie in der Aufnahmeposition mit ihrer Stirnfläche unterhalb einer Kante des Gehäuses zu liegen kommt. Durch das Telekommunikations-Endgerät nach außen gedrückt, hinterhakt die Stirnfläche an dieser Kante. Dies ist eine weitere Sicherung gegen das ungewollte Verdrehen der Backe.

Im Weiteren wird die erfindungsgemäße Halterung anhand einer bevorzugten Ausführungsform näher beschrieben. Dabei zeigen:
- Figur 1:: die Darstellung einer erfindungsgemäßen Halterung in der Ausgangsposition;
- Figur 2:: die Halterung gemäß Figur 1 mit transversal zu Einschuböffnung verschobenen Backen;
- Figur 3:: die erfindungsgemäße Halterung gemäß Figur 1 und 2 in ihrer Aufnahmeposition;
- Figur 6:: die Rückansicht der Halterung in der Position gemäß Figur 1 mit teilweise geöffnetem Gehäuse;
- Figur 7:: die Rückansicht der Halterung gemäß Figur 4 mit verdrehten Backen;
- Figur 8:: die Rückansicht der Halterung in der Position gemäß Figur 3 mit teilweise geöffnetem Gehäuse und
- Figur 9:: eine perspektivische Zeichnung eines Bolzens einer Backe mit gemeinsamen und dritten Federelementen.

Die in ihrer Ausgangsposition gezeigte Halterung 1 umfasst ein Gehäuse 2, mit dem sie beispielsweise an einem hier nicht gezeigten Griff eines Einkaufswagen befestigt werden kann. An dem Gehäuse 2 stehen eine erste Backe 3 und eine zweite Backe 4 vor, die achsensymmetrisch ausgeformt sind. Sie sind drehbar und verschieblich am Gehäuse 2 gehalten. Die Backen 3, 4 liegen aneinander an und werden von einem hier nicht gezeigten vor gespannten Federelement zusammengehalten. Gemeinsam bilden sie eine zumindest im wesentlichen V-förmige Einschuböffnung 5 für ein hier nicht gezeigtes Telekommunikations-Endgerät aus. Die erste 3 bzw. die zweite 4 Backe weisen eine zumindest im wesentlichen U-förmige erste Aufnahme 6 bzw. zweite Aufnahme 7 auf, welche die seitliche Begrenzung des zumindest im wesentlichen V-förmigen Einschuböffnung 5 bilden. Im unteren Bereich der Einschuböffnung 5 ist an jeder Backe 3,4 eine Lasche 8, 9 ausgebildet, deren Funktion später beschrieben wird.

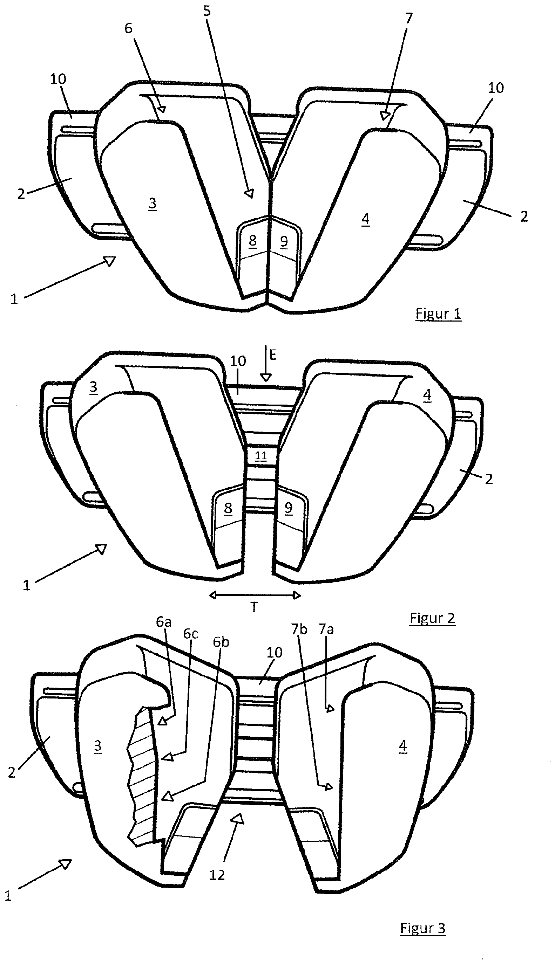

In der Figur 2 werden die Backen 3, 4 in einer Position gezeigt, in der sie transversal zu einer Einschubrichtung E des Telekommunikations-Endgeräts verschoben wurden. Die transversale Verschiebung T ist die Folge eines Einschieben des hier nicht gezeigten Telekommunikations-Endgeräts in die Einschuböffnung 5. Sobald die Seitenkanten des Telekommunikations-Endgeräts in Kontakt mit ersten Abschnitten 6a, 7a der Aufnahmen 6, 7 kommen und auf diese beim weiteren Einschieben des Endgeräts Druck ausgeübt wird, werden die Backen 3, 4 weggeschoben. Eine hier nicht sichtbare Auflagefläche jeder Backe 3, 4 liegt am oberen Seitenrand 10 des Gehäuses 2 auf und verhindert ein durch das induzierte Drehmoment verursachte Drehen der Backen 3, 4 jeweils nach außen. Die Backen 3, 4 können daher nur transversal ausweichen. Die transversale Verschiebung T der Backen 3, 4 ist vorgegeben durch ein Langloch 11, welches im Gehäuse 2 verläuft und in dem die Drehachsen der Backen 3, 4 verschoben werden können.

Beim Einschieben der Telekommunikations-Endgeräts oder der Hülle, in der das Endgerät gehalten wird, gleiten deren Eckbereiche entlang des ersten Abschnitts 6a bzw. des ersten Abschnitts 7a der beiden Aufnahmen 6, 7. Dabei drücken die Eckbereiche gegen die ersten Abschnitte 6a, 7a und verursachen damit die transversale Verschiebung T der Backen 3, 4. Die damit einhergehende Verbreiterung der Einschuböffnung 5 ermöglicht es dem Telekommunikations-Endgerät weiter in die Einschuböffnung 5 einzudringen. Sind die Bereiche soweit eingedrungen, dass sie zwischen den Rotationsachse der Backen 3, 4 angeordnet sind, erfolgt keine weitere transversale Verschiebung T der Backen 3, 4. stattdessen erfolgt eine Rotation der Backen 3, 4 in die in der Figur 3 gezeigte Halteposition.

In der Halteposition sind die Backen 3, 4 soweit gedreht, dass die zweiten Abschnitte 6b, 7b ihrer Aufnahmen 6, 7 zumindest im Wesentlichen parallel zu einander verlaufen. Diese Position des zweiten Abschnitts 6b wird in dem in Figur 3 zu sehenden Teilschnitt der Aufnahme 6 der ersten Backe 3 gezeigt. Da in der Ausgangsposition der Halterung der erste Abschnitt 6a in einem stumpferen Winkel zu dem ersten Abschnitt 7a verläuft als der zweite Abschnitt 6b zum zweiten Abschnitt 7b, führt dies in der Aufnahmeposition dazu, dass der erste Abschnitt 6a im Vergleich zum zweiten Abschnitt 6b leicht nach außen abgewinkelt verläuft. Das gleiche gilt für die hier nur verdeckt gezeigten ersten 7a und zweiten 7b Abschnitte der Aufnahme 7 der Backe 4. Dies führt dazu, dass ein in der Aufnahmeposition gehaltenes Telekommunikations-Endgerät zwischen den zweiten Abschnitten 6b, 7b gehalten wird, während sich im Bereich der ersten Abschnitte 6a, 7a ein nach oben hin zunehmend größerer Spalt zwischen den ersten Abschnitten 6a, 7a und der Randseite des Telekommunikations-Endgerät ausbildet.

Von Vorteil ist es, wenn ein Übergang 6c zwischen ersten und zweitem Abschnitt 6a, 6b auf der Rotationsachse liegt, sodass bei einer Rotation der Backe 3 keine Anpassung der Position in transversaler Richtung erfolgen muss. Gleiches gilt natürlich auch für die Aufnahme 7 der Backe 4.

In der Aufnahmeposition kommen die Laschen 8, 9 mit ihrer Stirnfläche an der Unterseite 12 des Gehäuses 2 zu liegen, solange sie von dem in die Aufnahme eingesetzten Telekommunikations-Endgerät nach außen gedrückt werden. Auf diese Weise bilden sie eine Verdreh-Sicherung für die Backen 3, 4 aus, welche im Vergleich zu Haltevorrichtung in entgegengesetzter Rotationsrichtung wirkt.

Von besonderem Vorteil ist es, wenn die zweiten Abschnitte 6b, 7b an ihrem den ersten Abschnitten 6a, 7a entgegengesetzten Ende einen Anschlag für das Endgerät ausbilden, so dass es nicht weiter eingeschoben werden oder herausrutschen kann.

Die erfindungsgemäße Halterung kann auf verschiedene Art und Weise an einem Rohr, insbesondere an einem rohrförmigen Griff eines Einkaufswagens befestigt werden. Die im Folgende erläuterte bevorzugte Befestigung ist aber nicht nur für die Halterung geeignet, sondern kann davon unabhängig auch zur kippsicheren Befestigung eines beliebigen Gegenstandes an einem Rohr, insbesondere an einem rohrförmigen Einkaufswagengriff eingesetzt werden.

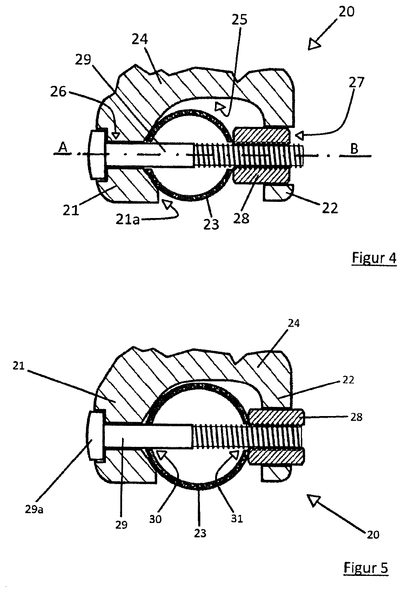

Eine solcher, in den Figuren 4 und 5 gezeigter Befestigungsfortsatz 20 kann mit dem Gehäuse der Halterung bzw. des beliebigen Gegenstandes verbunden sein oder einstückig mit ihm ausgebildet sein. Er weist zwei Schenkel 21, 22 auf, welche das Rohr 23 teilweise umfassen. Die beiden Schenkel 21, 22 werden über einen Boden 24 miteinander verbunden, so dass der Befestigungsvorsatz an seiner dem Rohr 23 zugewandten Innenseite 25 einen zumindest annähernd U-förmigen Verlauf aufweist. Der Boden 24 weist eine zeichnerisch dargestellte Bruchkante. Der an diese Bruchkante angrenzende, hier nicht gezeigte Abschnitt des Befestigungsfortsatzes 20 weist Mittel zur Befestigung der Halterung bzw. des beliebigen Gegenstandes auf.

Der erste, vorzugsweise materialstärker ausgebildete Schenkel 21 umfasst eine quer zum ersten Schenkel ausgerichtete, von der Außenseite des ersten Schenkels zu dessen Innenseite verlaufende erste Bohrung 26. Der ihm entgegengesetzte zweite Schenkel 22 weist in Verlängerung der Achse A der ersten Bohrung 26 eine Öffnung 27 auf.

Die Innenseite des ersten Schenkels 21 ist konkav ausgebildet, wodurch der Endbereich 21a des ersten Schenkels 21 für einen am ersten Schenkel 21 anliegenden Kreisbogenabschnitt eines in die U-förmige Öffnung des Befestigungsfortsatzes 20 eingesetzten Rohres 21 eine Hinterschneidung ausbildet.

Die den zweiten Schenkel 22 durchlaufende Öffnung 27 ist mehrkantig ausgebildet. Damit kann sie ein Außenprofil einer in die Öffnung 27 eingesetzten geringfügig kleineren Mutter 28 formschlüssig halten und gegen Verdrehung sichern. In einer bevorzugen Ausführungsform ist die Mutter 28 eine Vierkantmutter. Das Außenprofil einer Vierkantmutter bietet genügend Angriffsfläche zum verdrehsicheren Halten.

Die in die Öffnung 27 eingesetzte Mutter 28 lässt sich in Längsrichtung der Öffnung 27 verschieben. Auf diese Weise kann eine Schraube 29 in die erste Bohrung eingesetzt werden, über eine zweite Bohrung 30 in das Rohr 23 hinein und durch eine gegenüberliegende, also der zweiten Bohrung 30 um 180 Grad entgegengesetzten dritten Bohrung 31 aus dem Rohr 23 wieder hinaus in die Mutter 28 eingeführt werden.

Die verschieblich in der Öffnung 27 des zweiten Schenkels 22 gehaltene Mutter 28 ermöglicht es, durch Eindrehen der Schraube 29 in die Mutter 28 Rohre 23 mit verschiedenen Durchmessern an dem ersten Schenkel zu verspannen. Derart gehalten, ist der Befestigungsfortsatz 20 kippsicher am Rohr 23 befestigt. Die im Vergleich zum zweiten Schenkel 22 erhöhte Materialstärke des ersten Schenkels 21 verhindert ein Verbiegen des ersten Schenkels 21 und trägt auf diese Weise zu einem sicheren Halt des Befestigungsfortsatzes 20 bei. Derart ausgebildet, kann auch der Befestigungsfortsatz 20 wie bereits das Gehäuse und die Backen der Halterung aus Kunststoff gebildet sein.

Hingegen kann der zweite Schenkel 22, der lediglich die Mutter 28 verdrehsicher halten muss, entsprechend schwächer ausgelegt sein. Da seine Innenseite üblicherweise keinen Kontakt zum Rohr 23 bekommt, ist es zudem nicht erforderlich, diese ebenfalls konkav auszubilden. Hier reicht es aus, dass der zweite Schenkel 22 fertigungstechnisch einfacher ausgebildet ist, insbesondere gerade verläuft.

Die erste Bohrung 26 im ersten Schenkel 21 sowie die zweite 30 und dritte 31 Bohrung im Rohr 23 sind in ihrer Größe auf die Gewindeschraube 29 abgestimmt und haben vorzugsweise den gleichen Durchmesser. Dies gewährleistet einen möglichst spielfreien und damit festen Sitz des Befestigungsfortsatzes 20 an dem Rohr 23.

Der Winkel, in dem der Befestigungsfortsatz 20 am Rohr 23 gehalten wird, bestimmt die Ausrichtung der Achse B, welche durch die im Rohr 23 vorgesehene zweite 30 und dritte 31 Bohrung verläuft.

Zum Befestigen des Befestigungsvorsatz 20 an dem Rohr 23 ist es somit lediglich erforderlich, den Befestigungsvorsatz 20 auf das Rohr 23 zu setzen, die Achse A und die Achse B gleich auszurichten, die Schraube in die Bohrung 26 und anschließend in die Bohrungen 30 und 31 einzuführen, bis der Schraubenkopf 29a am ersten Schenkel 21 anliegt. Abschließend muss nur noch das Gewinde der Schraube 26 in die Öffnung 27 der am zweiten Schenkel 22 eingesetzte Mutter 28 eingedreht werden, bis das Rohr am ersten Schenkel 21 verspannt ist. Die Figuren 4 und 5 unterscheiden sich lediglich im Durchmesser des Rohres 23 und der dadurch bedingten Position der Mutter 28 in der Öffnung 27.

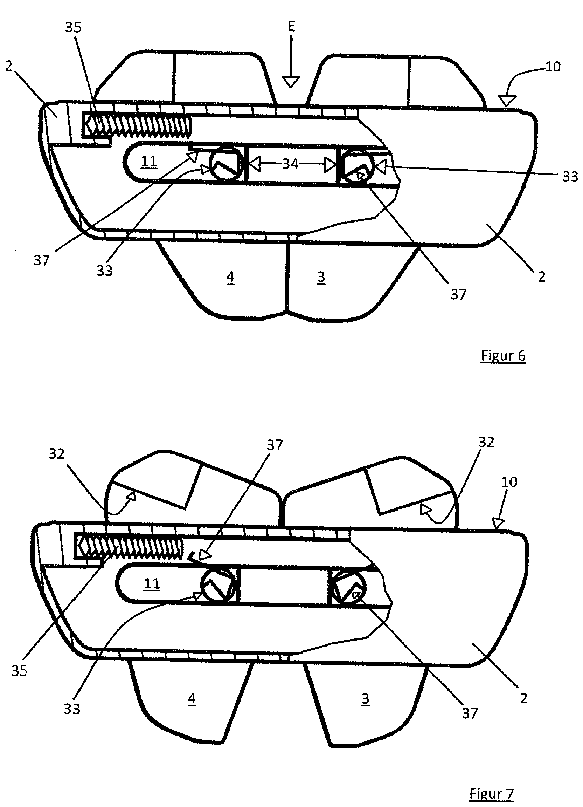

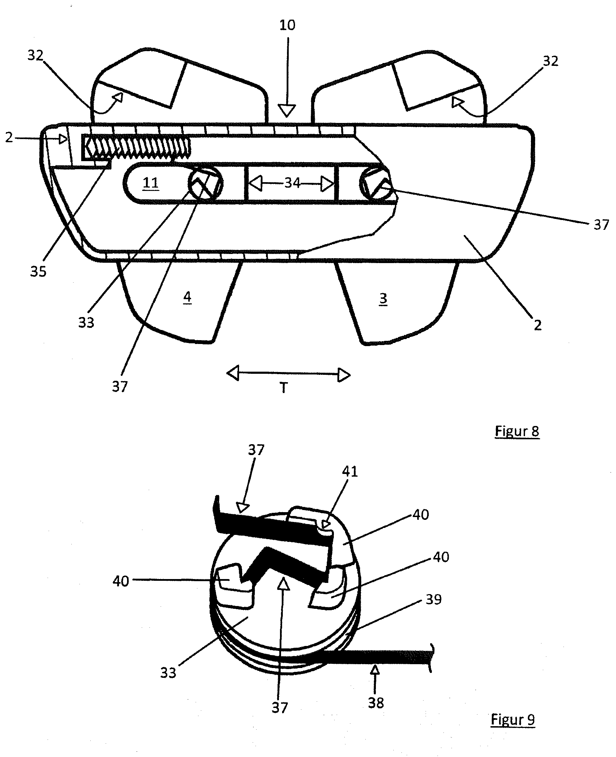

Mit der Figur 6 wird die Rückseite einer Halterung in einer der Halterung in Figur 1 entsprechenden Position gezeigt. Die Figur 7 zeigt die Rückansicht der Halterung gemäß Figur 4 mit verdrehten Backen und die Figur 8 die Rückansicht der Halterung in der Position gemäß Figur 3. Zur besseren Erläuterung der Merkmale wird in diesen Figuren auf die Darstellung des in den Figuren 4 und 5 gezeigten Befestigungsfortsatzes verzichtet und zusätzlich ein Teilbereich des Gehäuses 2 mittels eines Teilschnitts geöffnet. Die Halterung gemäß den Figuren 6-8 kann im Übrigen dieselben Merkmale aufweisen wie die beschriebenen Ausführungsformen der Halterung gemäß den Figuren 1-3.

Insbesondere in den Figuren 7 und 8 gut zu erkennen ist eine Auflagefläche 32 der Backen 3, 4, welche in der Aufnahmeposition an der Oberkante 10 des Gehäuses 2 anliegt und hierdurch eine Drehung der jeweiligen Backe 3, 4 weg vom Telekommunikations-Endgerät verhindert.

Jede Backe 3, 4 weist einen entlang ihrer Rotationsachse verlaufenden Bolzen 33 auf, welche in dem Langloch 11 des Gehäuses 2 geführt wird. Diese Führung erlaubt zum einen das Verschieben der Backen 3, 4 transversal zur Einschubrichtung E, also im rechten Winkel hierzu. Darüber hinaus erlaubt es auch die Drehung der Backen 3, 4 entlang ihrer Rotationsachse, insbesondere wenn die Rotationsachse der Backe 3, 4 und des Bolzens 33 übereinstimmen. Vorteilhafterweise weist das Langloch 11 für jeden Bolzen einen Anschlag 34 auf, der ein Zusammendrücken der Backen 3, 4 verhindert

In das Gehäuse 2 eingepresst ist ein Gewindestift 35, der parallel zur transversalen Richtung T ausgerichtet ist. In einer hierfür besonders geeigneten Ausführungsform ist die für das Einpressen vorgesehene Aufnahme 36 des Gehäuses 2 umfangsmäßig so ausgebildet ist, dass sie mehr als 200 Grad des Gewindestifts 35 umläuft.

Durch die Drehung der Backe 3, 4 in die mit Figur 8 gezeigte Aufnahmeposition greift ein drittes Federelement 37, welches am Bolzen 33 gehalten wird, in den Gewindestift 35 ein und blockiert ein weiteres Drehen der jeweiligen Backe 3, 4 über die Aufnahmeposition hinaus. Das dritte Federelement 37 hat den Vorteil, dass es sich bei Eingriff in die Rastung des Gewindestifts 35 verbiegt und auf diese Weise der Backe 3, 4 ermöglicht, wieder etwas zurück drehen, ohne dass das dritte Federelement 37 den Kontakt zur Rastung verliert. Von Vorteil ist es dabei, wenn das dritte Federelement 37 und die Rastung des Gewindestifts 35 so aufeinander abgestimmt werden, dass das dritte Federelement 37 in der Rastung verbleibt, solange die der Backe 3, 4 um 3-4 Grad gedreht wird. Hierdurch kann ein Spiel zwischen den Backen 3, 4 und dem Endgerät oder eine auf die Backen 3, 4 einwirkende rückdrehende Kraft ausgeglichen werden. Das dritte Federelement 37 kann beispielsweise als Metallstreifen ausgebildet sein.

Solange das dritte Federelement 37 in der Rastung verbleibt, blockiert es die weitere seitliche seitlich Verschiebung der Backe 3, 4. Bei einer über den normalen Gebrauch der Halterung hinausgehenden Krafteinwirkung klinkt sich das Federelement 37 aufgrund der weiter zunehmenden Biegung aus der Rastung des Gewindestifts 35 aus und in die nächstfolgende Rastung ein. Damit wirkt das dritte Federelement 37 als Überlastschutz. Bei übermäßig starker Translationskraft, beispielsweise bei einem Versuch der mutwilligen Zerstörung, wird das dritte Federelement 37 aus der Rastung gedrückt und gibt die jeweilige Backe 3, 4 frei.

Von besonderem Vorteil ist es, wenn der Gewindestift 35 so kurz ist, dass in der Ausgangsposition der Halterung das dritte Federelement 37 nicht in ihn eingreifen kann. Hierdurch wird die in Figur 7 gezeigte Drehung der jeweiligen Backe 3, 4 ermöglicht.

Mit Figur 9 wird eine perspektivische Darstellung des Bolzens 33 gezeigt. Das gemeinsame Federelement 38 umläuft den Umfang des Bolzen 33 um vorzugsweise mehr als 180 Grad, insbesondere um 270 Grad und wird an diesem verknotet. Vorzugsweise umläuft es den Bolzen 33 entlang einer Nut 39, welche am Bolzen 33 ausgebildet ist.

Von Vorteil ist es, wenn der Bolzen 33 eine Befestigung 40 für das dritte Federelement 37 aufweist, welche vorzugsweise an seiner Kopfseite ausgebildet ist. Die Befestigung 40 ist vorzugsweise als drei-Punkt Befestigung ausgebildet, von denen zumindest einer der Aufnahmen eine Überdachung 41 aufweist, welche ein Herausspringen des dritten Federelements 37 verhindert.

## Patentansprüche

1. Halterung für ein Telekommunikations-Endgerät, wobei die Halterung (1) zwei Backen (3, 4) aufweist, wobei die erste Backe (3) eine erste Aufnahme (6) für eine erste Randseite des Telekommunikations-Endgeräts und eine zweite Backe (4) eine zweite Aufnahme für eine der ersten Randseite gegenüberliegende zweite Randseite des Telekommunikations-Endgeräts umfasst,
**dadurch gekennzeichnet,**
**dass** die erste (6) und die zweite Aufnahme in einer Ausgangsposition der Halterung (1)jeweils eine Seite einer zumindest im wesentlichen V-förmige Einschuböffnung (5) für das Telekommunikations-Endgerät ausbilden, dass wenigstens eine der Backen (3, 4) drehbar an einem Gehäuse (2) der Halterung (1) befestigt ist, dass die Aufnahme (6, 7) der drehbar befestigten Backe (3, 4) zwei Abschnitte (6a, 7a, 6b, 7b) aufweist, wobei der erste Abschnitt (6a, 7a) in Einschubrichtung (E) des Telekommunikations-Endgeräts vor der Rotationsachse der Backe (3, 4) angeordnet ist und der zweite Abschnitt (6b, 7b) in Einschubrichtung (E) des Telekommunikations-Endgeräts hinter der Rotationsachse der Backe (3, 4) angeordnet ist, wobei die drehbar befestigte Backe (3, 4) gegen die Rückstellkraft eines ersten Federelements drehbar ist.

2. Halterung nach Anspruch 1,
**dadurch gekennzeichnet,**
**dass** die Rotationsachse der drehbar befestigten Backe (3, 4) zumindest annähernd transversal zur Einschubrichtung (E) des Telekommunikations-Endgeräts und gegen die Rückstellkraft eines zweiten Federelements verschieblich ist.

3. Halterung nach Anspruch 1 oder 2,
**dadurch gekennzeichnet,**
**dass** das erste und das zweite Federelement als ein gemeinsames Federelement (38) ausgebildet sind.

4. Halterung nach Anspruch 3,
**dadurch gekennzeichnet,**
**dass** das gemeinsame Federelement (38) zwischen der ersten (3) und zweiten (4) Backe, vorzugweise zwischen den Rotationsachsen beider Backen (3, 4) gespannt ist.

5. Halterung nach einem der vorangegangenen Ansprüche,
**dadurch gekennzeichnet,**
**dass** in der Ausgangsposition der Halterung (1) der erste Abschnitt der Aufnahme (6, 7) der drehbar befestigten Backe (3, 4) in einen stumpferen Winkel zum ersten Abschnitt (6a, 7a) der Aufnahme (6, 7) der gegenüberliegenden Backe (3, 4) angeordnet ist als der zweite Abschnitt (6b, 7b) der drehbar an dem Gehäuse (2) befestigten Backe (3, 4) zum zweiten Abschnitt (6b, 7b) der Aufnahme (6, 7) der gegenüberliegenden Backe (3, 4).

6. Halterung nach einem der vorangegangenen Ansprüche,
**dadurch gekennzeichnet,**
**dass** zumindest die zweiten Abschnitte (6b, 7b) der Aufnahmen (6, 7) der beiden Backen (3, 4) gerade verlaufen und dass die Rotationsachse der drehbar befestigten Backe (3, 4) in der Ausgangsposition der Halterung (1) im Übergang (6c) des ersten (6a, 7a) zum zweiten (6b, 7b) Abschnitt der Aufnahme (6, 7) angeordnet ist.

7. Halterung nach Anspruch 6,
**dadurch gekennzeichnet,**
**dass** die drehbar befestigten Backe (3, 4) eine Haltevorrichtung (37) aufweist, die ein weiteres Drehen der Backe und/oder ein Auseinanderschieben der beiden Backen (3, 4) blockiert, sobald die Backe (3, 4) in eine Position gedreht wurde, in welcher ihr zweiter Abschnitt (6b, 7b) zumindest im Wesentlichen parallel zum zweiten Abschnitt (6b, 7b) der gegenüberliegenden Backe (3, 4) verläuft.

8. Halterung nach Anspruch 7,
**dadurch gekennzeichnet,**
**dass** die Haltevorrichtung ein Stift oder ein drittes Federelement (37) ist, der in eine fest mit dem Gehäuse (2) verbundene, transversal zur Einschubrichtung verlaufende Zahnreihe, insbesondere eine Zahnreihe eines Gewindestifts (35) eingreift.

9. Halterung nach Anspruch 8,
**dadurch gekennzeichnet,**
**dass** die Haltevorrichtung (37) an einem Bolzen (33) der Backe (3, 4) befestigt ist, welcher entlang der Rotationsachse der Backe (3, 4) verläuft.

10. Halterung nach einem der Ansprüche 4-9,
**dadurch gekennzeichnet,**
**dass** das gemeinsame Federelement (38) zwischen zwei Bolzen (33) der Backen (3, 4) gespannt ist, vorzugsweise am Bolzen (33) entlang einer den jeweiligen Bolzen (33) umlaufenden Nut (39) geführt wird.

11. Halterung nach einem der vorangegangenen Ansprüche,
**dadurch gekennzeichnet,**
**dass** die drehbar befestigte Backe (3, 4) eine Auflagefläche (32) aufweist, die in Einschubrichtung (E) vor der Rotationsachse angeordnet ist, wobei die Auflagefläche (32) an einem Bereich einer in Einschubrichtung vor der Rotationsachse angeordneten Oberseite (10) des Gehäuses (2) aufliegt, wobei der Bereich zumindest im Wesentlichen transversal zur Einschubrichtung (E) und parallel zu Rotationsachse verläuft.

12. Halterung nach einem der vorangegangenen Ansprüche,
**dadurch gekennzeichnet,**
**dass** die erste und zweite Aufnahme (6, 7) an ihrem Boden einen U-förmigen Bereich ausbildet, so dass die in sie eingesetzten Randseiten des Telekommunikations-Endgeräts beidseitig hinterschnitten werden und die U-förmige Ausbildung der Aufnahmen (6, 7) einen Formschluss mit einer Vorderseite beziehungsweise Rückseite des Telekommunikations-Endgeräts ausbildet, wobei der Abstand der beiden Schenkel sich zum Boden des U hin insbesondere verringert.

13. Verfahren zum Einführen eines Telekommunikations-Endgeräts in eine Halterung, insbesondere in eine Halterung nach einem der Ansprüche 1-10,
**dadurch gekennzeichnet,**
**dass** die Halterung (1) zwei Backen (3, 4) umfasst, wobei jede Backe (3, 4) eine Aufnahme (6, 7) für eine Randseite des Telekommunikations-Endgeräts aufweist, wobei jede Aufnahme (6, 7) in einer Ausgangsposition der Halterung (1) eine Seite einer zumindest im wesentlichen V-förmigen Einschuböffnung (5) ausbildet, wobei in einem ersten Schritt das Telekommunikations-Endgerät in die Einschuböffnung (5) eingeführt wird, so dass gegenüberliegende Randseiten des Telekommunikations-Endgeräts an jeweils einer der Aufnahmen (6, 7) zur Anlage kommen, wobei ein weiteres Einschieben des Telekommunikations-Endgeräts entlang eines ersten Abschnitts (6a, 7a) der beiden Aufnahmen (6, 7) zumindest eine der Backen (3, 4) transversal (T) zur Einschubrichtung (E) verschiebt, dass die gegenüberliegenden Randseiten in einem zweiten Schritt in einen zweiten Abschnitt (6b, 7b) der beiden Aufnahmen (6, 7) eingeschoben werden, wobei bei Erreichen der zweiten Abschnitte (6b, 7b) diese parallel zu einander angeordnet werden.

## Claims

1. A bracket for a telecommunication terminal, wherein the bracket (1) has two jaws (3, 4), wherein the first jaw (3) comprises a first receptacle (6) for a first edge side of the telecommunication terminal and a second jaw (4) comprises a second receptacle for a second edge side opposite the first edge side of the telecommunication terminal,
**characterized in**
**that** in an initial position of the bracket (1), the first (6) and the second receptacle each form one side of an at least substantially V-shaped insertion opening (5) for the telecommunication terminal, in that at least one of the jaws (3, 4) is mounted rotatably on a housing (2) of the bracket (1), in that the receptacle (6, 7) of the rotatably mounted jaw (3, 4) has two sections (6a, 7a, 6b, 7b), wherein the first section (6a, 7a) is arranged in front of the axis of rotation of the jaw (3, 4) in the direction of insertion (E) of the telecommunication terminal and the second section (6b, 7b) is arranged behind the axis of rotation of the jaw (3, 4) in the direction of insertion (E) of the telecommunication terminal, wherein the rotatably mounted jaw (3, 4) is rotatable against the restoring force of a first spring element.

2. The bracket according to claim 1,
**characterized in**
**that** the axis of rotation of the rotatably mounted jaw (3, 4) is movable at least approximately transverse to the direction of insertion (E) of the telecommunication terminal and against the restoring force of a second spring element.

3. The bracket according to claim 1 or 2,
**characterized in**
**that** the first and the second spring element are formed as a common spring element (38).

4. The bracket according to claim 3,
**characterized in**
**that** the common spring element (38) is tensioned between the first (3) and the second (4) jaws, preferably between the axes of rotation of the two jaws (3, 4).

5. The bracket according to any one of the preceding claims,
**characterized in**
**that** in the initial position of the bracket (1), the first section of the receptacle (6, 7) of the rotatably mounted jaw (3, 4) is arranged at a more obtuse angle relative to the first section (6a, 7a) of the receptacle (6, 7) of the opposing jaw (3, 4) than the second section (6b, 7b) of the jaw (3, 4) rotatably mounted to the housing (2) relative to the second section (6b, 7b) of the receptacle (6, 7) of the opposing jaw (3, 4).

6. The bracket according to any one of the preceding claims,
**characterized in**
**that** at least the second sections (6b, 7b) of the receptacles (6, 7) of the two jaws (3, 4) run along a straight line, and in that in the initial position of the bracket (1), the axis of rotation of the rotatably mounted jaw (3, 4) is arranged at a transition (6c) from the first (6a, 7a) to the second (6b, 7b) section of the receptacle (6, 7).

7. The bracket according to claim 6,
**characterized in**
**that** the rotatably mounted jaw (3, 4) has a holding device (37) which blocks a continued rotating of the jaw and/or a spreading apart of the two jaws (3, 4) as soon as the jaw (3, 4) has been turned into a position in which its second section (6b, 7b) runs at least substantially parallel to the second section (6b, 7b) of the opposing jaw (3, 4).

8. The bracket according to claim 7,
**characterized in**
**that** the holding device is a pin or a third spring element (37) which engages in a row of teeth, in particular a row of teeth of a threaded pin (35), that is fixedly connected to the housing (2) and runs transverse to the direction of insertion.

9. The bracket according to claim 8,
**characterized in**
**that** the holding device (37) is mounted to a bolt (33) of the jaw (3, 4), which extends along the axis of rotation of the jaw (3, 4).

10. The bracket according to any one of claims 4 to 9,
**characterized in**
**that** the common spring element (38) is tensioned between two bolts (33) of the jaws (3, 4), preferably guided on the bolt (33) along a groove (39) circumferentially extending around the respective bolt (33).

11. The bracket according to any one of the preceding claims,
**characterized in**
**that** the rotatably mounted jaw (3, 4) has a supporting surface (32) arranged in front of the axis of rotation in the direction of insertion (E), wherein the supporting surface (32) rests on an area of an upper side (10) of the housing (2) arranged in front of the axis of rotation in the direction of insertion, wherein the area extends at least substantially transverse to the direction of insertion (E) and parallel to the axis of rotation.

12. The bracket according to any one of the preceding claims,
**characterized in**
**that** the first and second receptacles (6, 7) at their floor form a substantially U-shaped area, so that the edge sides of the telecommunication terminal inserted therein are undercut on both sides, and the U-shaped design of the receptacles (6, 7) forms a positive form closure with a front side and rear side, respectively, of the telecommunication terminal, wherein the distance between two legs of the U-shape decreases in particular towards the floor of the U.

13. A method for inserting a telecommunication terminal into a bracket, in particular into a bracket according to any one of claims 1 to 10,
**characterized in**
**that** the bracket (1) comprises with two jaws (3, 4), wherein each jaw (3, 4) has a receptacle (6, 7) for an edge side of the telecommunication terminal, wherein in an initial position of the bracket (1), each receptacle (6, 7) forms a side of an at least substantially V-shaped insertion opening (5), wherein in a first step, the telecommunication terminal is inserted into the insertion opening (5) so that opposing edge sides of the telecommunication terminal come to abut in each case against one of the receptacles (6, 7), wherein continued inserting the telecommunication terminal along a first section (6a, 7a) of the two receptacles(6, 7) displaces at least one of the jaws (3, 4) transverse (T) to the direction of insertion (E) so that in a second step, the opposing edge sides are inserted into a second section (6b, 7b) of the two receptacles (6, 7), wherein the second sections (6b, 7b) are arranged parallel to each other once the second sections have been reached.

## Revendications

1. Support pour terminal de télécommunication, dans lequel le support (1) comporte deux mâchoires (3, 4), dans lequel la première mâchoire (3) comprend un premier réceptacle (6) pour un premier côté de bord du terminal de télécommunications et une deuxième mâchoire (4) comprend un deuxième réceptacle pour un deuxième côté de bord du terminal de télécommunications opposé au premier côté de bord,
**caractérisé en ce que**
le premier (6) et le deuxième réceptacle dans une position de départ du support (1) forment chacun un côté d'une ouverture d'insertion (5) au moins sensiblement en forme de V pour le terminal de télécommunication, qu'au moins une des mâchoires (3, 4) est fixée rotativement sur un boîtier (2) du support (1), que le réceptacle (6, 7) de la mâchoire fixée rotativement (3, 4) comporte deux sections (6a, 7a, 6b, 7b), dans lequel la première section (6a, 7a) est disposée devant l'axe de rotation de la mâchoire (3, 4) dans le direction d'insertion (E) du terminal de télécommunication et le deuxième tronçon (6b, 7b) dans le direction d'insertion (E) du terminal de télécommunication derrière l'axe de rotation de la mâchoire (3, 4), dans lequel la mâchoire (3, 4) fixée rotativement est tournée à l'encontre de la force de rappel d'un premier élément à ressort.

2. Support selon la revendication 1,
**caractérisé en ce que**
l'axe de rotation de la mâchoire fixée rotativement (3, 4) peut être déplacé au moins approximativement transversalement à la direction d'insertion (E) du terminal de télécommunication et à l'encontre de la force de rappel d'un deuxième élément à ressort.

3. Support selon la revendication 1 ou 2,
**caractérisé en ce que**
le premier et le deuxième élément de ressort sont configurés comme un élément à ressort commun (38).

4. Support selon la revendication 3,
**caractérisé en ce que**
l'élément à ressort commun (38) est tendu entre la première (3) et la deuxième (4) mâchoire, de préférence entre les axes de rotation des deux mâchoires (3, 4).

5. Support selon une des revendications précédentes,
**caractérisé en ce que**
dans la position de départ du support (1) la première section du réceptacle (6, 7) de la mâchoire fixée rotativement (3, 4) est disposé en définissant un angle obtus avec la première section (6a, 7a) du réceptacle (6, 7) de la mâchoire opposée (3, 4) en tant que deuxième section (6b, 7b) de la mâchoire (3, 4) fixée rotativement au boîtier (2) à la deuxième section (6b, 7b) du réceptacle (6, 7) de la mâchoire opposée (3, 4).

6. Support selon une des revendications précédentes,
**caractérisé en ce qu'**
au moins les deuxièmes sections (6b, 7b) des réceptacles (6, 7) des deux mâchoires (3, 4) sont rectilignes et que l'axe de rotation de la mâchoire fixée rotativement (3, 4) est disposé dans la position de départ du support (1) dans la transition (6c) de la première (6a, 7a) à la deuxième (6b, 7b) section du réceptacle (6, 7).

7. Support selon la revendication 6,
**caractérisé en ce que**
les mâchoires fixées rotativement (3, 4) comportent un dispositif de maintien (37) qui bloque la poursuite de la rotation des mâchoires et/ou l'écartement des deux mâchoires (3, 4) dès que la mâchoire (3, 4) a été tournée dans une position dans laquelle sa deuxième section (6b, 7b) est au moins sensiblement parallèle à la deuxième section (6b, 7b) de la mâchoire opposée (3, 4).

8. Support selon la revendication 7,
**caractérisé en ce que**
le dispositif de maintien est une goupille ou un troisième élément élastique (37) qui s'engage dans une rangée de dents, en particulier une rangée de dents d'une tige filetée (35), solidaire du boîtier (2) et s'étendant transversalement au direction d'insertion.

9. Support selon la revendication 8,
**caractérisé en ce que**
le dispositif de maintien (37) est fixé sur un boulon (33) de la mâchoire (3, 4), qui s'étend le long de l'axe de rotation de la mâchoire (3, 4).

10. Support selon une quelconque des revendications 4 à 9,
**caractérisé en ce que**
l'élément élastique commun (38) est tendu entre deux boulons (33) des mâchoires (3, 4), étant de préférence guidé sur le boulon (33) le long d'une rainure (39) entourant le boulon respectif (33).

11. Support selon une des revendications précédentes,
**caractérisé en ce que**
la mâchoire fixée rotativement (3, 4) présente une surface d'appui (32) qui est disposée devant l'axe de rotation dans le direction d'insertion (E), dans lequel la surface d'appui (32) vient reposer sur une zone d'un sommet (10) disposé devant l'axe de rotation du boîtier (2), dans lequel la zone est au moins sensiblement transversale à la direction d'insertion (E) et parallèle à l'axe de rotation.

12. Support selon une quelconque des revendications précédentes,
**caractérisé en ce que**
le premier et le deuxième réceptacle (6, 7) forment une zone en forme de U à leur fond, de sorte que les bords des terminaux de télécommunications sont contre-dépouillés des deux côtés et la conception en forme de U des réceptacles (6, 7) réalise une conjonction de forme adaptée avec un côté avant ou arrière du terminal de télécommunications, dans lequel la distance entre les deux pans diminue notamment vers le bas du U.

13. Procédé d'insertion d'un terminal de télécommunication dans un support, notamment dans un support selon une quelconque des revendications 1 à 10,
**caractérisé en ce que**
le support (1) comprend deux mâchoires (3, 4), dans lequel chaque mâchoire (3, 4) comporte un réceptacle (6, 7) pour un côté de bord du terminal de télécommunications, dans lequel chaque réceptacle (6, 7) forme un côté d'une ouverture d'insertion (5) au moins sensiblement en forme de V dans une position de départ du support (1), dans lequel le terminal de télécommunication est inséré dans l'ouverture d'insertion (5) dans une première étape de sorte que des bords opposés du terminal de télécommunication viennent chacun reposer sur un des réceptacles (6, 7), dans lequel une autre insertion du terminal de télécommunication le long d'une première section (6a, 7a) des deux réceptacles (6, 7) déplace au moins une des mâchoires (3, 4) transversalement (T) à la direction d'insertion (E), **en ce que** les côtés de bords opposés sont insérés dans un deuxième temps dans une deuxième section (6b 7b) des deux réceptacles (6, 7), dans lequel lorsqu'ils atteignent les deuxièmes sections (6b, 7b) celles-ci sont disposées parallèlement les uns aux autres.
